# EUROPÄISCHE PATENTSCHRIFT

(11) **EP 3 633 476 B1**
(45) Veröffentlichungstag und Bekanntmachung des Hinweises auf die Patenterteilung: **04.09.2024**
(21) Anmeldenummer: 18197821.4
(22) Anmeldetag: 01.10.2018
(51) Int. Cl.: G05B 23/02

(54) **VERFAHREN, VORRICHTUNG UND SYSTEM ZUM ÜBERTRAGEN VON MASCHINENINFORMATIONEN AN EINE SERVICEEINRICHTUNG**
METHOD, DEVICE AND SYSTEM FOR TRANSMITTING MACHINE INFORMATION TO A SERVICE DEVICE
PROCÉDÉ, DISPOSITIF ET SYSTÈME DE TRANSMISSION D'INFORMATIONS DE MACHINE À UN DISPOSITIF DE SERVICE

(43) Veröffentlichungstag der Anmeldung: 08.04.2020
(73) Patentinhaber: BEUMER Group GmbH & Co. KG, 59269 Beckum (DE)
(72) Erfinder: Kirsch, Christopher, 58239 Schwerte (DE)
(74) Vertreter: Philipp, Matthias

(56) Entgegenhaltungen:
- US-A- 5 680 025
- US-A1- 2003 200 060
- US-A1- 2016 326 726

## Beschreibung

Die vorliegende Erfindung betrifft ein Verfahren zum Übertragen von Maschineninformationen einer Industrieanlage an eine Serviceeinrichtung, mit dem Ziel einer Wartung oder Betriebsoptimierung oder zum Abrufen einer Serviceleistung, eine dazu eingerichtete Datenübertragungsvorrichtung sowie ein System, das eine solche Datenübertragungsvorrichtung, eine Industrieanlage und eine Serviceeinrichtung umfasst. Ein Verfahren mit den Merkmalen des Oberbegriffs des Anspruchs 1 ist beispielsweise aus der US 2003/020060 A1 bekannt. Weitere Verfahren sind z.B. aus der US 5,680,025 A oder der US 2016/0326726 A1 bekannt.

Industrieanlagen, wie zum Beispiel Produktionsanlagen, Fertigungsmaschinen, Sortieroder Transportvorrichtungen o. ä. bedürfen regelmäßig Wartungen, Reparaturen oder Betriebsoptimierungen. Diese Anlagen stehen dabei häufig in einem Unternehmen, das die Anlagen zur Wertschöpfung nutzt, diese aber nicht selber hergestellt oder entwickelt hat. Den Mitarbeitern dieser Unternehmen, die die Anlagen im Alltag betreuen, fehlt in der Praxis oft das notwendige Know-how, um entsprechende Wartungen, Reparaturen oder Verbesserungen selbstständig durchführen zu können. Die ursprüngliche Herstellerfirma, Betreiberfirma oder eine sonstige Firma, die für das Warten, Reparieren oder Verbessern der Anlage zuständig ist, besitzt häufig keine Mitarbeiter in direkter Umgebung der Anlage. Treten Fehler an der Anlage auf oder müssen die Anlagen aus sonstigen Gründen gewartet oder verbessert werden, treten häufig Kommunikationsprobleme auf. Die Mitarbeiter, die die Anlage betreuen, müssen trotz mangelndem technischen Know-how etwaige Fehler oder Unzulänglichkeiten der Anlage beschreiben und diese dem Personal der Herstelleroder Betreiberfirma mitteilen können. Dies führt oft zu Missverständnissen und kostet Zeit und Geld.

Auf der anderen Seite sind mittlerweile viele Maschinen über Netzwerke vollständig transparent untereinander vernetzbar oder mit dem Internet verbindbar. Eine solche Vernetzung bietet zwar den Vorteil, dass die Maschinendaten einfach zugänglich sind, hat jedoch für die Firma, die die Anlage nutzt, den Nachteil, dass intransparent und ohne eigene Kontrolle Daten (eventuell auch sensible Daten) weitergegeben werden könnten.

Aufgabe der vorliegenden Erfindung ist es, die oben geschilderten Probleme zu überwinden und eine Möglichkeit bereitzustellen, Serviceprobleme wie Wartungen, Reparaturen oder betriebliche Verbesserungen von Industrieanlagen möglichst einfach zu gewährleisten und der Firma, die die Anlage nutzt, dennoch eine Kontrolle über ihre Daten zu ermöglichen.

Erfindungsgemäß wird diese Aufgabe durch ein Verfahren zum Übertragen von Maschineninformationen einer Industrieanlage an eine Serviceeinrichtung mit folgenden Schritten gelöst:
a) Erfassen von Maschineninformationen der Industrieanlage durch mindestens einen Sensor über einen festgelegten Aufnahmezeitraum,
b) Übertragen der Maschineninformationen als Maschinendaten an eine an der Industrieanlage angeordnete Datenübertragungsvorrichtung,
c) Abspeichern der Maschinendaten auf einem der Datenübertragungsvorrichtung zugeordneten Speicher,
d) Laufendes Vergleichen der übertragenen Maschinendaten mit Vorgabemaschinendaten, die in einer Datenbank gespeichert sind, und Feststellen eines Maschinenfehlers, wenn die Maschinendaten außerhalb eines von den Vorgabemaschinendaten festgelegten Bereichs liegen,
e) Erstellen eines Fehlercodes zu dem festgestellten Maschinenfehler, der Identifikationsinformationen der Industrieanlage enthält,
f) Zuordnen des Fehlercodes zu den in dem festgelegten Aufnahmezeitraum ermittelten Maschinendaten,
g) Darstellen von zumindest einem Teil der Maschinendaten auf einem Bildschirm für eine Bedienperson und/ oder Darstellen von zumindest einem Teil des Fehlercodes auf einem Bildschirm für eine Bedienungsperson,
h) Übertragen des Fehlercodes und der in dem dem Fehlercode zugeordneten, festgelegten Aufnahmezeitraum ermittelten Maschinendaten an eine örtlich von der Industrieanlage entfernte Serviceeinrichtung, dadurch gekennzeichnet, dass das Übertragen durch Betätigen eines Auslösers der Datenübertragungsvorrichtung durch die oder eine Bedienungsperson veranlasst wird, und dass der Aufnahmezeitraum mit dem Feststellen des Maschinenfehlers endet und um eine festgelegte maximale Zeitdauer zurückreicht oder eine Zeitspanne zwischen dem Auftreten eines festgelegten Ereignisses und dem Feststellen des Maschinenfehlers ist, wobei das festgelegte Ereignis ein früherer Wartungstermin, eine Änderung eines Betriebsparameters oder eine vorangegangene Feststellung eines Maschinenfehlers ist.

Anschließend können in einem weiteren Schritt ein Lösungsvorschlag, eine Rückmeldung, eine Leistungsoptimierung, eine Fehlerbehebung und/oder eine Anleitung zur Behebung eines Anlagenfehlers entweder wiederum über die Datenübertragungsvorrichtung oder über eine andere Kommunikationsmöglichkeit an die oder eine Bedienungsperson übermittelt werden. Dazu können die Maschinendaten und der zur Identifikation dienende Fehlercode von einer Person und/oder einem Rechner der Serviceeinrichtung analysiert und eine entsprechende Rückmeldung oder Lösung aus einer Datenbank ausgewählt und/oder ausgearbeitet werden, insbesondere automatisch (durch einen Prozessor). Eine entsprechende Person oder Abteilung kann zuvor von einem Rechner anhand des Fehlercodes ausgewählt worden sein.

Das erfindungsgemäße Verfahren bietet den Vorteil, dass die für eine Wartung, Reparatur oder Verbesserung der Industrieanlage relevanten Informationen unabhängig von dem Know-how der anwesenden Bedienungspersonen automatisch schnell und effizient zusammengetragen und mit einem einzigen "Knopfdruck" an eine Serviceeinrichtung übermittelt werden können. Gleichzeitig behält der Käufer/Kunde/Nutzer/Betreiber der Industrieanlage die Kontrolle darüber, wann und ob die Daten übermittelt werden.

Eine erfindungsgemäße Datenübertragungsvorrichtung, die zur Durchführung der Schritte c), d), e), f) und h) des oben beschrieben Verfahrens eingerichtet ist, weist einen Speicher, eine Maschinenschnittstelle, um eine Verbindung zu der Industrieanlage herzustellen, eine Kommunikationseinrichtung, um eine Verbindung zu der Serviceeinrichtung herzustellen, und einen Auslöser, um eine Übertragung von Maschinendaten an die Serviceeinrichtung zu veranlassen, auf.

Weiterhin kann die Datenübertragungsvorrichtung eine von der Industrieanlage unabhängige Energieversorgung oder einen Energiespeicher zum Versorgen der Datenübertragungsvorrichtung mit elektrischer Energie aufweisen. Bevorzugt versorgt die unabhängige Energieversorgung oder der Energiespeicher die Datenübertragungsvorrichtung im Fall eines Stromausfalls mit elektrischer Energie. Außerdem kann die Datenübertragungsvorrichtung eine Benutzerschnittstelle, um zumindest einen Teil der Maschineninformationen, des Fehlercodes und/oder von Informationen, die von der Serviceeinrichtung an die Datenübertragungseinrichtung übertragen wurden, darzustellen, aufweisen. Bevorzugt ist Benutzerschnittstelle ein Bildschirm, besonders bevorzugt ein E-Paper-Display.

Weiterhin betrifft die Erfindung ein System zum Durchführen des beschriebenen Verfahrens, mit einer Industrieanlage, mindestens einem Sensor zum Erfassen von Maschineninformationen der Industrieanlage, einer Serviceeinrichtung und einer Datenübertragungsvorrichtung gemäß der Erfindung zum Übertragen von Maschinendaten an die Serviceeinrichtung.

Das System kann mehrere erfindungsgemäße Datenübertragungsvorrichtungen, mehrere Industrieanlagen und eine Serviceeinrichtung umfassen. Maschinendaten sämtlicher Industrieanlagen sind auf einer Datenbank der Serviceeinrichtung gemeinsam speicherbar.

Die Maschineninformationen können eine oder mehrere der folgenden Informationen beinhalten: Messwerte eines Temperatursensors, bspw. der Umgebungstemperatur und/oder eines bestimmten Maschinenelements oder Betriebsstoffs (Öl, Luft), Messwerte eines Feuchtesensors, Messwerte eines Vibrationssensors, Messwerte eines Akustiksensors, Messwerte einer Härtemessung eines Fördergurts, Aufnahmen oder Messwerte einer optischen Überwachung, Angaben über einen Betriebsmodus der Industrieanlage, Leistungsdaten der Industrieanlage oder Betriebsparameter.

Die Sensoren können Eigenschaften oder Zustände der Industrieanlage messen oder Umgebungsbedingungen ermitteln. Die von den Sensoren ermittelten Maschineninformationen, zu denen also auch Umgebungsinformationen gehören können, werden in Maschinendaten gewandelt und entweder direkt an die Datenübertragungsvorrichtung oder zunächst an eine Anlagensteuerung der Industrieanlage und von dieser an die Datenübertragungsvorrichtung übertragen.

Die Zeitabstände für Messungen mit hoher Frequenz (z.B. akustische, optische Temperatur- oder Feuchtesensoren) können dabei zwischen 0.1 Sekunden und einer Stunde liegen, bevorzugt zwischen einer Sekunde und 60 Sekunden. Die Sensoren für Messungen mit niedrigeren Frequenzen (z.B. Fotoaufnahmen, Härtemessungen eines Fördergurts o. Ä.) können die Messungen mit längeren Zeitabständen durchführen. Beispielsweise können diese Messungen mit einem Zeitabstand zwischen einer Stunde und 10 Tagen durchgeführt werden, bevorzugt zwischen einer Stunde und 48 Stunden, besonders bevorzugt 24 Stunden.

Die Maschinendaten können von einer Anlagensteuerung in einer bestimmten Abtastfrequenz abgefragt werden und an die Datenübertragungsvorrichtung übermittelt werden. Alternativ können die Maschinendaten direkt von einem Prozessor der Datenübertragungsvorrichtung mit der Abtastfrequenz abgefragt werden.

Die festgelegte Zeitdauer kann zwischen 1 Sekunde und 10 Stunden betragen, etwa zwischen 18 Minuten und einer Stunde oder zwischen 10 und 30 Minuten.

Wenn der Aufnahmezeitraum nicht durch eine fixe Zeitspanne festgelegt wird, wird er durch ein vor dem Auftreten des Fehlers eingetretenes Ereignis gestartet. Ein solches Ereignis kann ein Wartungstermin sein, bei dem z.B. Mitarbeiter einer Hersteller- oder Servicefirma die Industrieanlage überprüft oder gewartet hat. Auch eine Änderung bestimmter Betriebsparameter (z.B. Änderung des zu transportierenden oder herzustellenden Produkts, der Austausch eines Werkzeuges, das Umstellen von manuellem auf automatischen Betrieb o. Ä.) oder das vorherige Auftreten eines Fehlers (bei dem die Daten ebenfalls von der Datenübertragungsvorrichtung übersendet wurden) kann als Beginn des Aufnahmezeitraums festgelegt werden. Weiterhin ist es möglich, dass der Nutzer der Industrieanlage manuell zu einem gewünschten Zeitpunkt einen Start des Aufnahmezeitraums veranlasst. Auch eine Kombination von Möglichkeiten der Festlegung des Aufnahmezeitraums ist denkbar. So ist es zum Beispiel möglich, dass der Aufnahmezeitraum bei Auftreten eines bestimmten Ereignisses gestartet wird, aber (z.B. aufgrund eines begrenzten Speichers) auf eine maximale Zeitdauer begrenzt ist und danach erneut beginnt. So ist es zum Beispiel möglich, dass der Aufnahmezeitraum bei Auftreten eines bestimmten Ereignisses gestartet wird, aber (z.B. aufgrund eines begrenzten Speichers) auf eine maximale Zeitdauer begrenzt ist und danach erneut beginnt.

Der Speicher, der der Datenübertragungsvorrichtung zugeordnet ist, kann mit der Datenbank identisch sein oder separat ausgebildet sein.

Der Fehlercode kann von der Anlagensteuerung oder von einer Recheneinheit der Datenübertragungsvorrichtung erzeugt werden. Bevorzugt wird der Maschinenfehler einer in einer Datenbank hinterlegten Fehlerkategorie zugeordnet.

Dazu können verschiedene Fehlerkategorien auf der Datenbank hinterlegt sein. Diese können vorab gespeichert sein und/oder aus bisher an dieser oder einer ähnlichen/gleichen Industrieanlage aufgetretenen Fehlern ermittelt worden sein. Bevorzugt sind in der Datenbank Referenzwerte für Fehlerszenarien abgespeichert, die sich mit den Daten vergleichen lassen, anhand derer der Fehler festgestellt wurde. So kann der Maschinenfehler automatisch einer bestimmten Fehlerkategorie zugeordnet werden.

Die Serviceeinrichtung kann anhand des Fehlercodes, der Maschinendaten, der Fehlerkategorie und/ oder einer personellen Verfügbarkeit einen Mitarbeiter oder eine Abteilung, der oder die die Maschinendaten und den Fehlercode analysiert, auswählen. Bevorzugt werden der übermittelte Fehlercode und/oder Maschinendaten mit einer Datenbank der Serviceeinrichtung abgeglichen. Die Datenbank ist bevorzugt nicht mit der Datenbank der Datenübertragungsvorrichtung identisch, obwohl dies alternativ der Fall sein kann.

Der Fehlercode und die Maschinendaten können mit in der Datenbank der Serviceeinrichtung gespeicherten Fehlercodes und diesen zugeordneten, gespeicherten Fehlerzustandsdaten verglichen werden, um den Maschinenfehler und/oder Fehlerquelle zu identifizieren.

So kann die Ursache für den Maschinenfehler ermittelt werden. Ein vorab in der Datenbank hinterlegter Lösungsvorschlag kann an den Nutzer/ ein Bedienpersonal der Industrieanlage oder an die Datenübertragungsvorrichtung zur Speicherung verschickt werden. Alternativ kann die Fehlerursache/-quelle an geschultes Wartungspersonal übermittelt werden, das das Problem dann beheben kann.

Den Fehlerzustandsdaten auf der Datenbank der Serviceeinrichtung können vorab ermittelte und auf der Datenbank gespeicherte Lösungen zugeordnet sein, mit denen der Maschinenfehler behebbar ist. Insbesondere kann mittels des Vergleichens der Fehlerzustandsdaten mit den Maschinendaten eine Lösung ausgewählt werden und an die Datenübertragungsvorrichtung übertragen werden.

Die Maschinendaten können einem in der Datenbank der Serviceeinrichtung gespeicherten Fehlercode zugeordnet werden und als zusätzliche Fehlerzustandsdaten in der Datenbank gespeichert werden.

So kann ein lernfähiges Wartungssystem etabliert werden. Die gewonnenen und in der Datenbank der Serviceeinrichtung gespeicherten Daten können nicht nur dazu genutzt werden, Fehler schnell zu kategorisieren und Lösungsvorschläge zu finden. Ferner können die Daten als Grundlage für ein lernfähiges System genutzt werden. Es ist möglich, Schwachstellen an den Industrieanlagen zu finden und diese zu verbessern, Wartungszyklen (also festgelegte Zeiträume, nach denen Wartungen durchgeführt werden) zu optimieren, die Anlagensteuerung zu verbessern und/oder das verantwortliche Personal zu schulen.

Folgend wird die Erfindung anhand eines Ausführungsbeispiels näher erläutert.

Eine erfindungsgemäße Datenübertragungsvorrichtung ist für verschiedene Arten von Industrieanlagen denkbar. Beispielsweise kann eine solche Datenübertragungsvorrichtung an einer Produktions-, Transport-, Förder- oder Sortieranlage angebracht sein. Dabei kann es sich jeweils um eine einzelne Maschine oder einen Zusammenschluss mehrerer Maschinen handeln, die an eine einzige Datenübertragungsvorrichtung angeschlossen sind. Diese Maschinen werden meist von einer Herstellerfirma für einen Kunden geplant und/oder gebaut. Der Kunde kann die Anlage dann beispielsweise in einer Produktionsanlage, einem Logistikzentrum, einem Lager oder Ähnlichem nutzen.

In einer Ausführungsform kann die Datenübertragungsvorrichtung genutzt werden, um verschiedene Daten über die Anlage an eine Serviceeinrichtung zu übermitteln. Die Datenübertragungsvorrichtung ist dabei am Standort der Anlage angeordnet und bevorzugt unmittelbar an der Anlage, d. h. zum Beispiel an oder neben einem Bedienpult der Anlage. Die Serviceeinrichtung hingegen ist an einem räumlich entfernten Standort (bevorzugt einem Standort der Wartung-, Betreiber-, oder Herstellungsfirma) vorgesehen.

Über die Datenübertragungsvorrichtung ist eine Kommunikationsverbindung zwischen der Serviceeinrichtung und der Datenübertragungsvorrichtung zum Übertragen von Maschinendaten, die die Maschineninformationen der Anlage darstellen, herstellbar. Als Kommunikationsverbindung ist beispielsweise eine Internetverbindung, Ethernetverbindung oder Mobilfunkverbindung denkbar. Bevorzugt kann die Serviceeinrichtung den Absender (also eine ID der Datenübertragungseinrichtung) schon anhand der Kommunikationsverbindung ermitteln, beispielsweise über die Verwendung einer Simkarte oder die IP-Adresse der Vorrichtung.

Um die Maschinendaten der Anlage zu speichern, weist die Datenübertragungsvorrichtung einen Speicher beispielsweise in Form einer Datenbank auf.

Die Kommunikationsverbindung zwischen der Datenübertragungsvorrichtung und der Serviceeinrichtung wird über einen von einem Mitarbeiter oder Betreiber der Maschine bzw. Industrieanlage zu betätigenden Auslöser aktiviert. Der Auslöser kann ein hardwareimplementierter Knopf, ein über einen berührungsempfindlichen Bildschirm aktivierbarer "soft Button" oder eine Schnittstelle zu einem Benutzerendgerät sein. Ein solches Benutzerendgerät kann beispielsweise ein Mobiltelefon, ein Tablet, tragbarer Computer oder ein ähnliches Datenverarbeitungsgerät sein, über das wiederum die Kommunikationsverbindung aktiviert werden kann. In diesem Zusammenhang bedeutet das Aktivieren der Kommunikationsverbindung, dass Maschinendaten von der Datenübertragungsvorrichtung an die Serviceeinrichtung übermittelt werden.

Auf dem Speicher der Datenübertragungsvorrichtung werden Daten der Maschineninformationen gespeichert, die über Sensoren an der Anlage ermittelt werden, von Mitarbeitern manuell eingetragen werden oder von der Steuerung der Anlage hinterlegt werden. Solche Informationen können zum Beispiel Leistungsdaten, Zustandsinformationen, Sensor- und Rohmaschinendaten und /oder Anlagenparameter sein. Als Leistungsdaten können in diesem Zusammenhang Daten über den Durchsatz der Anlage, den Stromverbrauch der Anlage oder vergleichbare Produktionskennzahlen verstanden werden. Zustandsinformationen können in diesem Zusammenhang Informationen über den Betriebszustand der Anlage sein, zum Beispiel ob die Anlage in einem automatischen oder manuellen Betrieb arbeitet, welches Produkt gerade auf der Anlage hergestellt oder gefördert wird, oder Ähnliches. Sensoroder Maschineninformationen können jegliche Informationen sein, die über Sensoren ermittelt werden können. Dies sind insbesondere optische Aufzeichnungen oder Messungen, Temperaturdaten, Feuchtwerte, Härtemessungen eines Fördergurts, elektrische oder mechanische Widerstandsmessungen, mechanische Spannungs- oder Dehnungsmessungen, Vibrations- oder akustische Messungen, elektrische Spannungen oder Ströme oder aus solchen Messdaten ermittelte Rechenwerte wie bspw. Mittelwerte oder statistische Größen.

Neben den Maschineninformationen können auch Fehlercodes automatisch erzeugt werden. Ein Fehlercode kann Informationen über Art, Typ und Standort der Anlage, Kontakte oder weitere Informationen zum Kunden oder zu Mitarbeitern des Kunden beinhalten. Diese Informationen unterscheiden sich von den Maschineninformation insoweit, als dass die Maschineninformationen variable Werte darstellen, die sich gegebenenfalls über die Zeit ändern und daher regelmäßig gemessen oder neu eingetragen werden müssen. Demgegenüber sind die genannten Informationen des Fehlercodes im Wesentlichen zeitunabhängig und entsprechend voreingestellt.

Weiterhin kann ein Fehlercode eine Information umfassen, die einen auftretenden Fehler einer Fehlerkategorie zuordnet. Dazu kann von einer Anlagensteuerung der Industrieanlage oder von der Datenübertragungsvorrichtung der Fehler kategorisiert werden. Dabei können ein oder mehrere Werte, die bevorzugt Teil der Maschinendaten sind, mit in der Datenbank der Datenübertragungsvorrichtung hinterlegten Referenzdaten verglichen werden, um den Fehler einer Kategorie zuzuordnen. Beispielsweise kann das Überschreiten einer bestimmten Temperatur eine eigene Fehlerkategorie für einen Fehlercode bilden. In einigen Ausführungsformen kann die Serviceeinrichtung durch eine Abfrage der Datenbank der Serviceeinrichtung an Hand des Fehlercodes die übertragenen Daten bereits einem bestimmten Problem zuordnen. Im genannten Beispiel einer überhöhten Temperatur an einer bestimmten Stelle könnte z.B. auf eine defekte Kühleinrichtung geschlossen werden.

Bestimmte Fehlercodes werden automatisch erzeugt, wenn bestimmte Ereignisse eintreten. Solche Ereignisse können zum Beispiel das Betätigen eines Notaus-Knopfs, eine von einem Mitarbeiter eingegebene Fehlermeldung, dass Über- oder Unterschreiten eines bestimmten Grenzwertes, ein Stromausfall, ein erfasster bestimmter Verschleiß eines Bauteils, eine Blockade oder ein sonstiger definierter und erfasster Ausfall der Industrieanlage sein. Der Fehlercode wird zusammen mit den Maschinendaten von der Datenübertragungsvorrichtung mittels der Kommunikationsverbindung an die Serviceeinrichtung übermittelt. Daraufhin kann entweder von einem Mitarbeiter oder automatisch überprüft werden, ob bestimmten Fehlern regelmäßig gleiche oder ähnliche Anlagenzustände vorhergehen.

Die Datenübertragungsvorrichtung weist bevorzugt einen eigenen Energiespeicher auf. Der Energiespeicher kann die alleinige Energieversorgung der Datenübertragungsvorrichtung darstellen oder zusätzlich zu einer Netzversorgung vorgesehen sein. Auch eine ausschließlich über ein eigenes oder separates Stromnetz gewährleistete Stromversorgung ist denkbar. Der Energiespeicher kann als Notstromversorgung dienen, falls es zu einem Stromausfall an der Anlage kommt. Der Energiespeicher kann dabei über das Stromnetz aufgeladen werden, solange dieses aktiv ist.

Auch die Datenübertragungsvorrichtung selbst kann überwacht werden. Dazu kann ein Verbindungskennwert (zum Beispiel die Netzabdeckung) oder der Speicherzustand der Datenübertragungsvorrichtung aufgezeichnet werden. Diese Vorrichtungsinformationen können dazu genutzt werden, um zu überwachen, ob eine durchgehende Funktionstüchtigkeit der Datenübertragungsvorrichtung gewährleistet ist. Zum Ermitteln des Verbindungsgrenzwerts kann beispielsweise regelmäßig automatisch ein Testsignal an die Serviceeinrichtung verschickt und von dieser überprüft werden.

Die Serviceeinrichtung verfügt bevorzugt über einen Rechner bzw. Prozessor und eine Benutzerschnittstelle (zum Beispiel ein Graphic User Interface/Display), mittels derer die eingegangen Informationen von Mitarbeitern ausgewertet werden können. Anschließend können zum Beispiel Lösungsvorschläge, Terminvorschläge, Fehleranalysen o. Ä. und an die Datenübertragungsvorrichtung zurückgeschickt werden.

Bevorzugt werden Fehlercode und Maschinendaten von der Serviceeinrichtung automatisch ausgewertet. Dazu weist die Serviceeinrichtung eine Datenbank auf. Die Datenbank beinhaltet vorab gespeicherte Fehlercodes. Der Fehlercode oder ein Teil des Fehlercodes, der von der Datenübertragungsvorrichtung an die Serviceeinrichtung übermittelt wurde, wird dann mit den Fehlercodes, die in der Datenbank der Serviceeinrichtung hinterlegt sind, verglichen. Jedem in der Datenbank hinterlegten Fehlercode ist ein Satz von Fehlerzustandsdaten zugeordnet. Jeder Satz Fehlerzustandsdaten bilden einen fehlerbehafteten Anlagenzustand ab und kann beispielsweise Daten beinhalten, die Temperaturwerte an der Anlage oder in der Anlagenumgebung, Feuchtewerte, Geschwindigkeiten, Drehzahlen, Maschinenleistungen etc. widerspiegeln. Diese Daten werden von dem Prozessor mit den übertragenen Maschinendaten verglichen. Anhand dieses Vergleichs kann ein vorgegebener Lösungsvorschlag ermittelt werden. Dieser Lösungsvorschlag kann beispielsweise als Text- oder Videodatei hinterlegt sein und an den Kundenversand werden, damit dieser den Fehler bzw. das Problem selbst lösen kann. Die Auswahl des Lösungsvorschlags kann anhand der Wertebereiche bestimmter Sensormesswerte, detektierter Ereignisse oder ähnlichem erfolgen, die mit Sollwerten oder Grenzwerten verglichen werden.

Alternativ, insbesondere wenn es sich um ein neuartigen Fehler handelt oder einen Fehler, den der Kunde nicht selbst lösen kann, kann ein Mitarbeiter, der Hersteller-, Betreiber- oder Servicefirma benachrichtigt werden und die Maschineninformationen erhalten, um eine Wartung oder Reparatur durchzuführen oder den Kunden entsprechen zu instruieren.

Die Datenübertragungsvorrichtung kann über einen Bildschirm verfügen, auf denen die ermittelten Maschineninformationen darstellbar sind. Auf dem Bildschirm können außerdem zumindest Teile der Fehlercodes dargestellt werden. In einer vorteilhaften Ausführungsform wird auf dem Bildschirm außerdem eine Kontaktinformation zu einem Mitarbeiter der Wartungs-, Hersteller-, Betreiberfirma dargestellt, so dass dem Mitarbeiter an der Industrieanlage bzw. an der Datenübertragungsvorrichtung eine einfache Möglichkeit gegeben wird, entsprechendes Servicepersonal zu kontaktieren. Bevorzugt, wird ein Bildschirm mit einem geringen Energieverbrauch verwendet, z.B. ein E-Paper-Display. So kann der Bildschirm auch in einem Akku- oder Batteriebetrieb, z.B. bei einem Stromausfall, ausreichend lange betrieben werden.

## Patentansprüche

1. Verfahren zum Übertragen von Maschineninformationen einer Industrieanlage, mit folgenden Schritten:
a) Erfassen von Maschineninformationen der Industrieanlage durch mindestens einen Sensor über einen festgelegten Aufnahmezeitraum,
b) Übertragen der Maschineninformationen als Maschinendaten an eine an der Industrieanlage angeordnete Datenübertragungsvorrichtung,
c) Abspeichern der Maschinendaten auf einem der Datenübertragungsvorrichtung zugeordneten Speicher,
d) Laufendes Vergleichen der übertragenen Maschinendaten mit Vorgabemaschinendaten, die in einer Datenbank gespeichert sind, und Feststellen eines Maschinenfehlers, wenn die Maschinendaten außerhalb eines von den Vorgabemaschinendaten festgelegten Bereichs liegen,
e) Erstellen eines Fehlercodes zu dem festgestellten Maschinenfehler, der Identifikationsinformationen der Industrieanlage enthält,
f) Zuordnen des Fehlercodes zu den in dem festgelegten Aufnahmezeitraum ermittelten Maschinendaten,
g) Darstellen von zumindest einem Teil der Maschinendaten auf einem Bildschirm für eine Bedienungsperson und/ oder Darstellen zumindest eines Teils des Fehlercodes auf einem Bildschirm für eine Bedienungsperson,
h) Übertragen des Fehlercodes und der in dem dem Fehlercode zugeordneten, festgelegten Aufnahmezeitraum ermittelten Maschinendaten an eine örtlich von der Industrieanlage entfernte Serviceeinrichtung, **dadurch gekennzeichnet, dass** das Übertragen durch Betätigen eines Auslösers der Datenübertragungsvorrichtung durch die Bedienungsperson oder eine zweite Bedienungsperson veranlasst wird, und dass der Aufnahmezeitraum mit dem Feststellen des Maschinenfehlers endet und um eine festgelegte maximale Zeitdauer zurückreicht oder eine Zeitspanne zwischen dem Auftreten eines festgelegten Ereignisses und dem Feststellen des Maschinenfehlers ist, wobei das festgelegte Ereignis ein früherer Wartungstermin, eine Änderung eines Betriebsparameters oder eine vorangegangene Feststellung eines Maschinenfehlers ist.

2. Verfahren nach Anspruch 1, **dadurch gekennzeichnet, dass** die Maschineninformationen eine oder mehrere der folgenden Informationen beinhalten:
Messwerte eines Temperatursensors, Messwerte eines Feuchtesensors, Messwerte eines Vibrationssensors, Messwerte eines Akustiksensors, Messwerte einer Härtemessung, Aufnahmen oder Messwerte einer optischen Überwachung, Angaben über einen Betriebsmodus der Industrieanlage, Leistungsdaten der Industrieanlage oder Betriebsparameter.

3. Verfahren nach einem der vorhergehenden Ansprüche, **dadurch gekennzeichnet, dass** die Maschinendaten von einer Anlagensteuerung in einer bestimmten Abtastfrequenz abgefragt werden und an die Datenübertragungsvorrichtung übermittelt werden oder direkt von einer Recheneinheit der Datenübertragungsvorrichtung mit der Abtastfrequenz abgefragt werden.

4. Verfahren nach einem der vorhergehenden Ansprüche, **dadurch gekennzeichnet, dass** der Fehlercode von der Anlagensteuerung oder von einer Recheneinheit der Datenübertragungsvorrichtung erzeugt wird, wobei der Maschinenfehler einer in einer Datenbank der Datenübertragungsvorrichtung hinterlegten Fehlerkategorie zugeordnet werden kann.

5. Verfahren nach einem der vorhergehenden Ansprüche, **dadurch gekennzeichnet, dass** die Serviceeinrichtung anhand des Fehlercodes, der Maschinendaten, der Fehlerkategorie und/ oder einer personellen Verfügbarkeit automatisch einen Mitarbeiter oder eine Abteilung auswählt, der oder die die Maschinendaten und den Fehlercode analysiert.

6. Verfahren nach einem der vorhergehenden Ansprüche, **dadurch gekennzeichnet, dass** der Fehlercode und die Maschinendaten mit in einer Datenbank der Serviceeinrichtung gespeicherten Fehlercodes und diesen zugeordneten, vorab in der Datenbank gespeicherten Fehlerzustandsdaten verglichen werden.

7. Verfahren nach Anspruch 6, **dadurch gekennzeichnet, dass** den Fehlerzustandsdaten auf der Datenbank der Serviceeinrichtung Lösungen zugeordnet sind, mit denen der Maschinenfehler behebbar ist, und wobei mittels des Vergleichens der Fehlerzustandsdaten mit den Maschinendaten eine Lösung ausgewählt und an die Datenübertragungsvorrichtung übertragen wird.

8. Verfahren nach einem der vorhergehenden Ansprüche 6 oder 7, wobei die Maschinendaten einem in der Datenbank der Serviceeinrichtung gespeicherten Fehlercode zugeordnet werden und als zusätzliche Fehlerzustandsdaten in der Datenbank gespeichert werden.

9. Datenübertragungsvorrichtung, die zur Durchführung der Schritte c), d), e), f) und h) des Verfahrens nach einem der vorhergehenden Ansprüche eingerichtet ist, aufweisend einen Speicher, eine Maschinenschnittstelle, um eine Verbindung zu der Industrieanlage herzustellen, eine Kommunikationseinrichtung, um eine Verbindung zu der Serviceeinrichtung herzustellen, und einen Auslöser, um eine Übertragung von Maschinendaten an die Serviceeinrichtung zu veranlassen.

10. Datenübertragungsvorrichtung nach Anspruch 9, aufweisend eine von der Industrieanlage unabhängige Energieversorgung oder einen Energiespeicher zum Versorgen der Datenübertragungsvorrichtung mit elektrischer Energie.

11. Datenübertragungsvorrichtung nach Anspruch 9 oder 10, aufweisend eine Benutzerschnittstelle, um zumindest einen Teil der erfassten Maschineninformationen, des Fehlercodes und/oder von Informationen, die von der Serviceeinrichtung an die Datenübertragungseinrichtung übertragen wurden, darzustellen.

12. System zum Durchführen des Verfahrens nach einem der Ansprüche 1 bis 8, mit einer Industrieanlage, mindestens einem Sensor zum Erfassen von Maschineninformationen der Industrieanlage, einer Serviceeinrichtung und einer Datenübertragungsvorrichtung nach einem der Ansprüche 9 bis 11, zum Übertragen von Maschinendaten an die Serviceeinrichtung.

13. System nach Anspruch 12, umfassend mehrere Datenübertragungsvorrichtungen nach einem der Ansprüche 9 bis 11, mehrere Industrieanlagen und eine Serviceeinrichtung, wobei auf einer Datenbank der Serviceeinrichtung Maschinendaten aller Industrieanlagen gemeinsam gespeichert sind.

## Claims

1. Method for transmitting machine information of an industrial plant, having the following steps:
a) acquiring machine information of the industrial plant by at least one sensor over a defined recording period,
b) transmitting the machine information as machine data to a data transmission device arranged on the industrial plant,
c) storing the machine data in a memory assigned to the data transmission device,
d) continuously comparing the transmitted machine data with specification machine data which are stored in a database, and determining a machine fault if the machine data lie outside a range defined by the specification machine data,
e) creating an error code for the determined machine fault, which error code contains identification information of the industrial plant,
f) assigning the error code to the machine data determined in the defined recording period,
g) displaying at least some of the machine data on a screen for an operator and/or displaying at least some of the error code on a screen for an operator,
h) transmitting the error code and the machine data determined in the defined recording period assigned to the error code to a service facility which is locally remote from the industrial plant, **characterized in that** the transmission is initiated by actuating a trigger of the data transmission device by the operator or a second operator, and **in that** the recording period ends with the determination of the machine fault and extends back by a defined maximum time period or is a time period between the occurrence of a defined event and the determination of the machine fault, wherein the defined event is an earlier maintenance date, a change in an operating parameter or a previous determination of a machine fault.

2. Method according to claim 1, **characterized in that** the machine information contains one or more of the following items of information:
measured values of a temperature sensor, measured values of a humidity sensor, measured values of a vibration sensor, measured values of an acoustic sensor, measured values of a hardness measurement, recordings or measured values of an optical monitoring, information about an operating mode of the industrial plant, performance data of the industrial plant or operating parameters.

3. Method according to one of the preceding claims, **characterized in that** the machine data are queried by a plant controller at a specific sampling frequency and are transmitted to the data transmission device or are queried directly by a computing unit of the data transmission device at the sampling frequency.

4. Method according to one of the preceding claims, **characterized in that** the error code is generated by the plant controller or by a computing unit of the data transmission device, wherein the machine error can be assigned to an error category stored in a database of the data transmission device.

5. Method according to one of the preceding claims, **characterized in that** the service facility automatically selects, on the basis of the error code, the machine data, the error category and/or a staff availability, an employee or a department which analyzes the machine data and the error code.

6. Method according to one of the preceding claims, **characterized in that** the error code and the machine data are compared with error codes stored in a database of the service facility and error state data assigned to said error codes and previously stored in the database.

7. Method according to claim 6, **characterized in that** the error state data on the database of the service facility are assigned solutions with which the machine error can be remedied, and wherein a solution is selected and transmitted to the data transmission device by means of the comparison of the error state data with the machine data.

8. Method according to one of the preceding claims 6 or 7, wherein the machine data are assigned to an error code stored in the database of the service facility and are stored in the database as additional error state data.

9. Data transmission device which is set up to carry out steps c), d), e), f) and h) of the method according to one of the preceding claims, having a memory, a machine interface in order to establish a connection to the industrial plant, a communication facility in order to establish a connection to the service facility, and a trigger in order to initiate a transmission of machine data to the service facility.

10. Data transmission device according to claim 9, having an energy supply independent of the industrial plant or an energy store for supplying the data transmission device with electrical energy.

11. Data transmission device according to claim 9 or 10, having a user interface in order to display at least some of the acquired machine information, the error code and/or information which has been transmitted from the service facility to the data transmission facility.

12. System for carrying out the method according to one of claims 1 to 8, having an industrial plant, at least one sensor for acquiring machine information of the industrial plant, a service facility and a data transmission device according to one of claims 9 to 11, for transmitting machine data to the service facility.

13. System according to claim 12, comprising a plurality of data transmission devices according to one of claims 9 to 11, a plurality of industrial plants and a service facility, wherein machine data of all industrial plants are stored together on a database of the service facility.

## Revendications

1. Procédé de transmission d'informations de machines d'une installation industrielle, avec les étapes suivantes :
a) relevé d'informations de machines de l'installation industrielle par au moins un capteur sur une période d'enregistrement déterminée,
b) transmission des informations de machines en tant que données de machines à un dispositif de transmission de données disposé sur l'installation industrielle,
c) stockage des données de machines sur une mémoire correspondant au dispositif de transmission de données,
d) comparaison en continu des données de machines transmises avec des données de machines de consigne, qui sont stockées dans une base de données et détection d'une erreur de machine lorsque les données de machines se trouvent hors d'une plage prédéterminée par les données de machines de consigne,
e) génération d'un code d'erreur correspondant à l'erreur de machine détectée, qui contient des informations d'identification de l'installation industrielle,
f) attribution du code d'erreur aux données de machines déterminées dans la période d'enregistrement déterminée,
g) représentation d'au moins une partie des données de machines sur un écran à l'attention d'un opérateur et/ou représentation d'au moins une partie du code d'erreur sur un écran à l'attention d'un opérateur,
h) transmission du code d'erreur et des données de machines déterminées dans la période d'enregistrement déterminée, correspondant au code d'erreur, à un dispositif de service distant localement de l'installation industrielle, **caractérisé en ce que** la transmission est effectuée par actionnement d'un déclencheur du dispositif de transmission de données par l'opérateur ou un deuxième opérateur et **en ce que** la période d'enregistrement se termine avec la détection de l'erreur de machine et est d'une durée maximale déterminée ou est un laps de temps entre l'apparition d'un événement déterminé et la détection de l'erreur de machine, dans lequel l'événement déterminé est une date de maintenance antérieure, une modification d'un paramètre de fonctionnement ou une détection précédente d'une erreur de machine.

2. Procédé selon la revendication 1, **caractérisé en ce que** les informations de machines contiennent une ou plusieurs des informations suivantes :
valeurs de mesure d'un capteur de température, valeurs de mesure d'un capteur d'humidité, valeurs de mesure d'un capteur de vibrations, valeurs de mesure d'un capteur acoustique, valeurs de mesure d'un capteur de dureté, enregistrement ou valeurs de mesure d'une surveillance optique, informations concernant un mode de fonctionnement de l'installation industrielle, données de puissance de l'installation industrielle ou paramètres de fonctionnement.

3. Procédé selon l'une des revendications précédentes, **caractérisé en ce que** les données de machines sont interrogées par une commande d'installation avec une fréquence d'échantillonnage déterminée et sont transmises au dispositif de transmission de données ou sont interrogées directement par une unité de calcul du dispositif de transmission de données avec la fréquence d'échantillonnage.

4. Procédé selon l'une des revendications précédentes, **caractérisé en ce que** le code d'erreur est généré par la commande d'installation ou par une unité de calcul du dispositif de transmission de données, dans lequel l'erreur de machine peut être classée dans une catégorie d'erreur enregistrée dans une base de données du dispositif de transmission de données.

5. Procédé selon l'une des revendications précédentes, **caractérisé en ce que** le dispositif de service sélectionne automatiquement, à l'aide du code d'erreur, des données de machines, de la catégorie d'erreur et/ou d'une disponibilité du personnel, un collaborateur ou un département qui analyse les données de machines et le code d'erreur.

6. Procédé selon l'une des revendications précédentes, **caractérisé en ce que** le code d'erreur et les données de machines sont comparés avec des données d'état d'erreur, préalablement enregistrées dans une base de données des codes d'erreur stockées dans le dispositif de service, et correspondant à celles-ci.

7. Procédé selon la revendication 6, **caractérisé en ce que**, aux données d'état d'erreur dans la base de données du dispositif de service, sont attribuées des solutions avec lesquelles l'erreur de machine peut être éliminée et dans lequel la comparaison des données d'état d'erreur avec les données de machines permet de sélectionner une solution et de la transmettre au dispositif de transmission de données.

8. Procédé selon l'une des revendications 6 ou 7, dans lequel les données de machines sont attribuées à un code d'erreur stocké dans la base de données du dispositif de service et sont stockées en tant que données d'état d'erreur supplémentaires dans la base de données.

9. Dispositif de transmission de données conçu pour l'exécution des étapes c), d), e), f) et h) du procédé selon l'une des revendications précédentes, comprenant une mémoire, une interface de machine permettant d'établir une liaison avec l'installation industrielle, un dispositif de communication permettant d'établir une liaison avec le dispositif de service et un déclencheur permettant d'effectuer une transmission des données de machines au dispositif de service.

10. Procédé selon la revendication 9, comprenant une alimentation en énergie indépendante de l'installation industrielle ou un accumulateur d'énergie pour l'alimentation du dispositif de transmission de données en énergie électrique.

11. Procédé selon la revendication 9 ou 10, comprenant une interface utilisateur permettant de représenter au moins une partie des informations de machines relevées, du code d'erreur et/ou des informations qui ont été transmises par le dispositif de service au dispositif de transmission de données.

12. Système pour l'exécution du procédé selon l'une des revendications 1 à 8, avec une installation industrielle, au moins un capteur pour le relevé d'informations de machines de l'installation industrielles, un dispositif de service et un dispositif de transmission de données selon l'une des revendications 9 à 11, pour la transmission des données de machines au dispositif de service.

13. Système selon la revendication 12, comprenant plusieurs dispositifs de transmission de données selon l'une des revendications 9 à 11, plusieurs installations industrielles et un dispositif de service, dans lequel, dans une base de données du dispositif de service, sont stockées ensemble les données de machines de toutes les installations industrielles.
